# EUROPÄISCHE PATENTANMELDUNG

(11) **EP 1 923 606 A2**
(43) Veröffentlichungstag der Anmeldung: **21.05.2008**
(21) Anmeldenummer: 07121071.0
(22) Anmeldetag: 20.11.2007
(51) Int. Cl.: F16H 57/04, F16H 61/40

(54) **Hydraulische Anordnung**

(30) Priorität: 20.11.2006 DE 102006054863
(71) Anmelder: Deere & Company, Moline, IL 61265-8098 (US)
(72) Erfinder: Bitter, Marcus, 68199, Mannheim (DE); Nordhoff, Hendrik, 88329, Havixbeck (DE); Oberst, Karsten, 67065, Ludwigshafen (DE)
(74) Vertreter: Bradl, Joachim

(57) **Zusammenfassung**

Es wird eine hydraulische Anordnung für ein landwirtschaftliches Fahrzeug (30) vorgeschlagen. Die hydraulische Anordnung umfasst einen Haupthydraulikzweig (10), der von einer Haupthydraulikpumpe (18) mit Hydraulikflüssigkeit gespeist wird, eine Ladepumpe (22), durch welche die Haupthydraulikpumpe (18) mit Hydraulikflüssigkeit aufladbar ist, und einen Schmierhydraulikzweig (12, 14). Um Leistungsverluste am Fahrzeug (30) möglichst gering zu halten, insbesondere bei hohen Drehzahlen wird vorgeschlagen, dass die Ladepumpe (22) als variable Ladepumpe ausgebildet ist und wenigstens eine Teilmenge der von der Ladepumpe (22) geförderten Hydraulikflüssigkeit zur Versorgung des Schmierhydraulikzweigs (12, 14) abzweigbar ist.

## Beschreibung

Die Erfindung betrifft eine hydraulische Anordnung für ein landwirtschaftliches Fahrzeug mit einem Haupthydraulikzweig, der von einer Haupthydraulikpumpe mit Hydraulikflüssigkeit gespeist wird, einer Ladepumpe, durch welche die Haupthydraulikpumpe mit Hydraulikflüssigkeit aufladbar ist, und einem Schmierhydraulikzweig.

Bei mobilen Arbeitsmaschinen bzw. landwirtschaftlichen Fahrzeugen ist es üblich, dass die an der Maschine bzw. am Fahrzeug vorgesehenen hydraulischen Komponenten durch getrennte Hydraulikkreisläufe bzw. Hydraulikzweige versorgt werden. Dies ist zum Beispiel ein Haupthydraulikzweig oder ein Getriebehydraulikzweig. Je nach Konstruktionsart wird der Haupthydraulikzweig in unterschiedliche Zweige unterteilt, um Lenkung, Bremse und andere hydraulische Komponenten mit Hydraulikflüssigkeit zu versorgen.

Beim Getriebehydraulikzweig ist es ferner üblich, dass dieser sowohl den Schalthydraulikzweig als auch den Schmierhydraulikzweig umfasst, so dass sowohl die Funktionen der einzelnen Getriebekupplungen als auch die Schmierung und Kühlung der Lager und sonstiger beweglicher Getriebeteile gewährleistet wird.

Zur Versorgung des Getriebehydraulikzweigs werden üblicherweise kostengünstige, einfache Konstantpumpen verwendet. Die Verwendung von Konstantpumpen hat jedoch den Nachteil, dass diese für einen ausreichenden Volumenstrom bei Leerlaufdrehzahl ausgelegt werden müssen und bei steigender Motordrehzahl zunehmend Hydraulikflüssigkeit fördern, welche nicht benötigt wird und daher ungenutzt in den Tank geführt werden muss. Dadurch entstehen unnötige Leistungsverluste am gesamten Fahrzeugkonzept.

Bei den Haupthydraulikzweigen werden zur Vermeidung von derartigen Leistungsverlusten variable bzw. verstellbare Haupthydraulikpumpen bzw. Verstellpumpen mit Load-Sensing-Hydrauliksystemen verwendet. Diese Verstellpumpen weisen in der Regel jedoch nur eine begrenzte Ansaugfähigkeit auf, weswegen Ladepumpen verwendet werden, die diese Verstellpumpen mit Niederdruckhydraulikflüssigkeit versorgen bzw. aufladen. Ladepumpen sind üblicherweise als Konstantpumpen ausgeführt, die über gute Ansaugeigenschaften verfügen, so dass auch bei Einsatz in kalten Umgebungen ein ausreichender Ansaugdruck gewährleistet ist. Jedoch kommt es auch bei Einsatz einer als Konstantpumpe ausgebildeten Ladepumpe in der Regel zu Leistungsverlusten, da die Konstantpumpen immer etwas mehr Hydraulikflüssigkeit fördern müssen, als die Verstellpumpe maximal abnehmen kann. Die restliche Hydraulikflüssigkeit wird zum Tank abgeführt. Die Leistungsverluste steigen, wenn die Verstellpumpe beispielsweise keine Hydraulikflüssigkeit abnimmt, so dass die gesamte von der Ladepumpe geförderte Hydraulikflüssigkeit zum Tank hin abgeführt werden muss.

Die der Erfindung zu Grunde liegende Aufgabe wird darin gesehen, eine hydraulische Anordnung der eingangs genannten Art derart auszubilden, dass die oben genannten Leistungsverluste reduziert werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine hydraulische Anordnung der eingangs genannten Art derart ausgebildet, dass die Ladepumpe als variable Ladepumpe ausgebildet ist und wenigstens eine Teilmenge der von der Ladepumpe geförderten Hydraulikflüssigkeit zur Versorgung des Schmierhydraulikzweigs abzweigbar ist. Die verstellbare bzw. variable Ladepumpe versorgt somit sowohl die verstellbare Haupthydraulikpumpe als auch den Schmierhydraulikzweig des Fahrzeugs mit der jeweils benötigten Menge an Hydraulikflüssigkeit. Hierzu wird die variable bzw. verstellbare Ladepumpe so eingestellt, dass sich im Ladedruckhydraulikzweig immer ein bestimmter Ladedruck einstellt, der von der Ladepumpe durch Veränderung des Fördervolumens aufrechterhalten wird. Die Haupthydraulikpumpe ist an diesen Ladedruckkreis angeschlossen und sobald diese Haupthydraulikpumpe ihre Fördermenge und damit ihr Schluckvolumen vergrößert, bricht der Druck im Ladedruckkreis leicht zusammen und die Ladepumpe vergrößert ihr Fördervolumen, um den voreingestellten Ladedruck wieder herzustellen. Der Schmierhydraulikzweig ist so angeordnet, dass von der Ladepumpe über vorzugsweise Überdruckventile Hydraulikflüssigkeit zum Schmierhydraulikzweig abfließen kann und so ein Getriebe des Fahrzeugs mit einer über die gesamte Motordrehzahl konstanten Menge an Schmierflüssigkeit versorgt wird. Diese Überdruckventile sind unter Berücksichtigung der Druckverluste in den Schmierflüssigkeitsleitungen (hier sind ggfs. mehrere unterschiedlich eingestellte Überdruckventile erforderlich) so eingestellt, dass sich deren Öffnungsdruck je nach erforderlicher Menge an Schmierflüssigkeit unterhalb des eingestellten Ladedrucks befindet. Somit wird ein konstanter Volumenstrom zur Schmierung abfließen (da das Druckgefälle zwischen Ladedruckkreis und Schmierölaustritt konstant bleibt), da die verstellbare Ladepumpe bestrebt ist, die abfließende Menge an Schmierflüssigkeit auszugleichen, indem sie den voreingestellten Ladedruck aufrecht erhält.

In einer bevorzugten Ausgestaltung der Erfindung ist ein separater Schalthydraulikzweig zur Schaltung von Kupplungen eines Getriebes vorgesehen, wobei wenigstens eine Teilmenge der von der Verstellpumpe geförderten Hydraulikflüssigkeit zur Versorgung des Schalthydraulikzweigs abzweigbar ist. Da der Druck im Ladedruckzweig relativ gering ist, kann es sinnvoll sein, den benötigten Schaltdruckzweig für das Schalten von Kupplungen im Getriebe mit Hydraulikflüssigkeit aus dem Haupthydraulikzweig zu speisen, indem man dem Schalthydraulikzweig die erforderliche Priorität einräumt.

In einer alternativen Ausführungsform ist ein separater Schalthydraulikzweig zur Schaltung von Kupplungen in einem Getriebe mit separater Konstantpumpe vorgesehen, wobei der Schalthydraulikzweig von der Konstantpumpe mit Hydraulikflüssigkeit versorgt wird. Bei dieser Variante würde der Schalthydraulikzweig unabhängig von der Verstellpumpe des Haupthydraulikzweiges betrieben werden.

Vorzugsweise kann in diesem Fall eine Teilmenge der von der Konstantpumpe geförderten Hydraulikflüssigkeit für den Schalthydraulikzweig zur Aufladung der Verstellpumpe abgezweigt werden. Die nicht benötigte Hydraulikflüssigkeit des Schaltdruckzweiges wird dann zur Unterstützung des Ladedruckzweiges herabgedrosselt, beispielsweise mit einem Druckreduzierventil oder einem einfachen Überdruckventil, und dem Ladedruckzweig zugeführt bzw. zur Aufladung der Haupthydraulikpumpe herangezogen. Dieses würde umso effektiver, je höher die Motordrehzahl und damit die Drehzahl der Konstantpumpe des Schaltdruckzweiges wird.

Eine Teilmenge der überschüssig von der Konstantpumpe des Schaltdruckzweiges geförderten Hydraulikflüssigkeit kann auch zur Versorgung des Schmierhydraulikzweigs abgezweigt werden, um die Leistungsverluste zu reduzieren.

Der Schmierhydraulikzweig wird vorzugsweise zur Schmierung von Getriebekomponenten eines Getriebes herangezogen.

Ferner kann der Schmierhydraulikzweig jedoch auch zur Schmierung von anderen niederdruckgeschmierten Komponenten, wie beispielsweise die Achsen eines Fahrzeugs, insbesondere die Hinterachse oder ein Achsgetriebe einer der Fahrzeugachsen, herangezogen werden.

Der Haupthydraulikzweig ist vorzugsweise zur hydraulischen Versorgung von Steuerventilen vorgesehen, die insbesondere zur Versorgung anderer hydraulischer Komponenten am Fahrzeug, beispielsweise Anbaugeräte, Frontlader etc., vorgesehen sind.

Insbesondere dient der Haupthydraulikzweig auch zur hydraulischen Versorgung einer hydraulischen Anhängevorrichtung, vorzugsweise einer Dreipunktanhängevorrichtung. Die an der Anhängevorrichtung vorgesehenen hydraulischen Komponenten werden durch die im Haupthydraulikzweig bereitgestellte Hydraulikflüssigkeit betrieben, beispielsweise auch die Hubzylinder an den Lenkern der Anhängevorrichtung.

Der Haupthydraulikzweig kann ferner auch für eine hydraulische Versorgung einer Achsfederung für eine Achse des Fahrzeugs vorgesehen sein.

Des Weiteren kann der Haupthydraulikzweig zur hydraulischen Versorgung einer Kabinenfederung für eine Kabine des Fahrzeugs vorgesehen sein.

Die hydraulische Versorgung einer Bremsanlage für das Fahrzeug kann ebenfalls durch den Haupthydraulikzweig gegeben sein.

Für den Fall, dass kein separater Lenkhydraulikzweig mit elektrischer Pumpe vorgesehen ist, kann der Haupthydraulikzweig auch zur hydraulischen Versorgung einer Lenkanlage für eine Lenkung des Fahrzeugs vorgesehen sein.

Eine erfindungsgemäße hydraulische Anordnung hat den Vorteil, dass durch die Kombination verschiedener, erforderlicher Niederdruckhydraulikzweige zum Teil erhebliche Leitungseinsparungen für das Fahrzeug erzielt werden können, da sich die Versorgung der unterschiedlichen hydraulischen Komponenten bzw. Verbraucher durch Haupthydraulikzweig und Schmierhydraulikzweig relativ drehzahlunabhängig und bedarfsgesteuert realisieren lässt, wobei sich gegenüber den konventionellen Anordnungen mindestens zwei Konstantstrompumpen durch eine verstellbare Ladepumpe ersetzen lassen. Ferner stellt sich ein Vorteil bezüglich Kosten und Entwicklungsaufwand ein, da bezüglich des Schmierhydraulikzweigs alle Leitungen und Ventile auf einen niedrigeren, konstant gehaltenen Schmierflüssigkeitsstrom ausgelegt werden können.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: ein Blockschaltbild einer erfindungsgemäßen hydraulischen Anordnung mit Versorgung des Schalthydraulikzweiges durch die Haupthydraulikpumpe,
- Fig. 2: ein Blockschaltbild einer weiteren erfindungsgemäßen hydraulischen Anordnung mit Versorgung des Schalthydraulikzweiges durch eine separate Kolbenpumpe und
- Fig. 3: eine schematische Seitenansicht eines landwirtschaftlichen Fahrzeugs mit einer erfindungsgemäßen hydraulischen Anordnung.

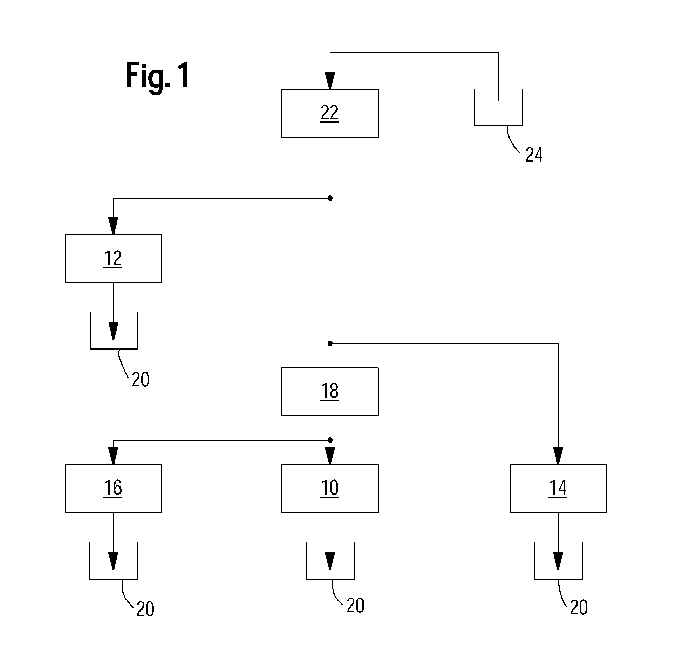

Figur 1 zeigt den prinzipiellen Aufbau einer erfindungsgemäßen hydraulischen Anordnung in einem Blockschaltbild. Die hydraulische Anordnung findet vorzugsweise Einsatz in landwirtschaftlichen Maschinen bzw. Fahrzeugen und ist insbesondere für landwirtschaftliche Schlepper geeignet.

Die hydraulische Anordnung umfasst einen Haupthydraulikzweig 10, einen Schmierhydraulikzweig 12, 14 und einen Schalthydraulikzweig 16. Zur Versorgung des Haupthydraulikkreises 10 ist eine verstellbare Haupthydraulikpumpe 18, beispielsweise eine verstellbare oder variable Axial-Kolbenpumpe vorgesehen. Die einzelnen Hydraulikzweige 10, 12, 14, 16 sind mit entsprechenden Rücklaufreservoirs oder Hydrauliktanks 20 verbunden, in die überschüssige Hydraulikflüssigkeit funktionsgemäß zurückgeführt bzw. abgelassen wird. Zur Versorgung des Schalthydraulikzweiges 16 wird eine Teilmenge der von der Haupthydraulikpumpe 18 geförderten Hydraulikflüssigkeit abgezweigt und dem Schalthydraulikzweig 16 zugeführt. Der Schalthydraulikzweig dient zur Schaltung von Getriebekomponenten, insbesondere hydraulisch betätigbare Kupplungen des Getriebes. Ferner ist eine verstellbare Ladepumpe 22 vorgesehen die mit einem Hydrauliktank 24 verbunden ist und Hydraulikflüssigkeit in den Haupthydraulikzweig zum Aufladen der verstellbaren Haupthydraulikpumpe sowie in den Schmierhydraulikzweig pumpt.

Der Haupthydraulikzweig 10 umfasst mehrere hydraulische Komponenten, die mit Hochdruckhydraulik versorgt werden. Dazu zählen beispielsweise Steuerventile (nicht gezeigt) zum Ansteuern oder Betreiben von hydraulischen Anbaugeräten, wie z.B. Frontlader oder hydraulisch betätigbare Anhängegeräte oder Bodenbearbeitungsgeräte. Ferner gehört dazu eine hydraulisch betätigte Anhängevorrichtung, die beispielsweise als DreipunktAnhängevorrichtung ausgebildet sein und über mehrere hydraulische Aktoren, insbesondere Hydraulikzylinder, an verschiedenen Lenkern verfügen kann. Des Weiteren umfasst der Haupthydraulikzweig hydraulische Komponenten, die Teil einer hydraulischen Achsfederung einer Vorder- oder Hinterachse des Fahrzeugs oder einer hydraulischen Kabinenfederung sind. Ferner dient der Hydraulikzweig zur Versorgung von hydraulischen Bremsanlagenkomponenten oder von hydraulischen Komponenten, die Teil der Lenkanlage zur Lenkung des Fahrzeugs sind.

Der Schmierhydraulikzweig ist einer Niederdruckhydraulik zuzuordnen und sorgt für eine Schmiermittelversorgung der in einem Getriebe zum Schalten des Getriebes angeordneten Schaltkupplungen. Ein weiterer Teil des Schmierhydraulikzweigs dient der Schmiermittelversorgung von Achskomponenten bzw. Achsgetriebeanordnungen.

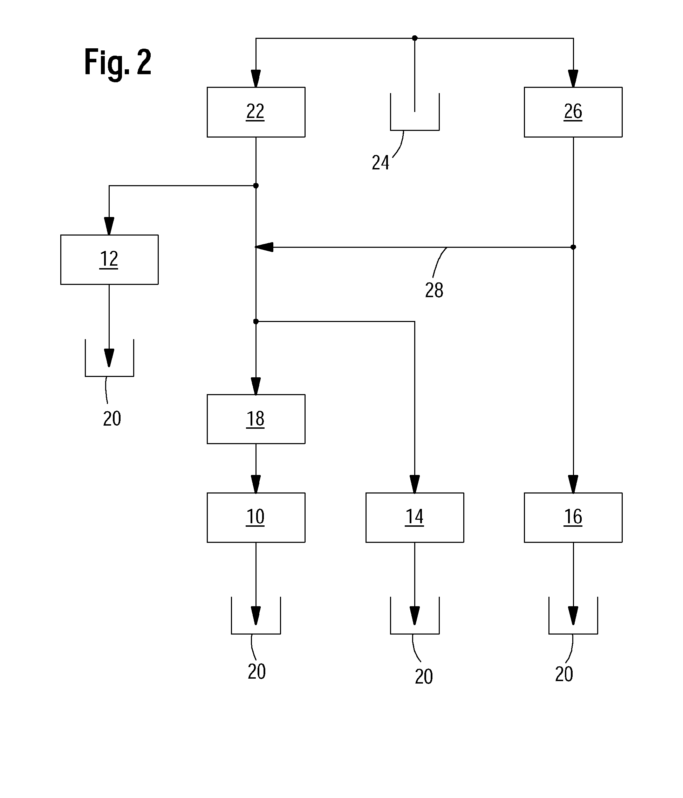

In Figur 2 ist eine alternative Ausführungsform dargestellt, die im Wesentlichen dem Ausführungsbeispiel aus Figur 1 gleicht, nur dass hier eine Konstantpumpe 26 parallel zur Ladepumpe 22 betrieben wird und der Versorgung des Schalthydraulikzweiges 16 dient. Die Konstantpumpe 26 kann beispielsweise als Zahnradpumpe ausgebildet sein. Ferner ist ein Bypass 28 oder Abzweig angeordnet, der ein Abzweigen wenigstens einer Teilmenge der von der Konstantpumpe 26 geförderten Hydraulikflüssigkeit ermöglicht. Zu viel geförderte Hydraulikflüssigkeit, beispielsweise bei hohen Motordrehzahlen, kann dann der Haupthydraulikpumpe 18 bzw. dem Haupthydraulikzweig 10 zugeführt bzw. in den Schmierhydraulikzweig 12, 14 gespeist werden, wodurch Leistungsverluste reduziert werden, da zu viel geförderte Menge an Hydraulikflüssigkeit nicht ungenutzt in die Hydrauliktanks 20 zurückläuft.

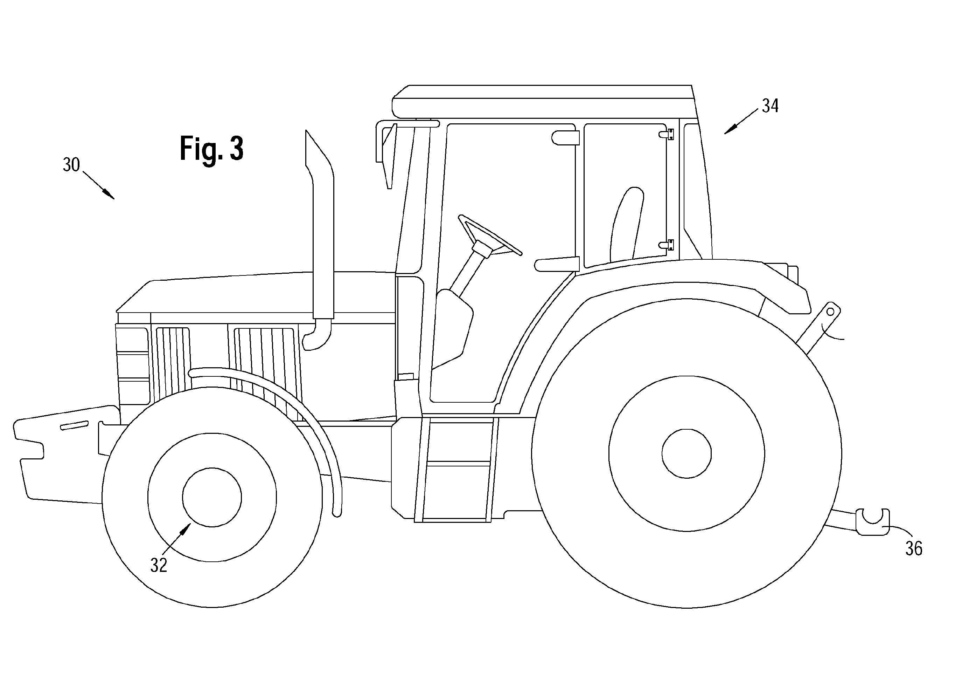

Figur 3 zeigt einen landwirtschaftlichen Schlepper 30, der eine der in den Figuren 1 oder 2 dargestellten hydraulischen Anordnungen aufweist. Der Schlepper weist eine hydraulisch gefederte Vorderachse 32, sowie eine hydraulisch gefederte Kabine 34 auf. Ferner weist der Schlepper 30 ein hydraulisch betriebenes Getriebe (nicht gezeigt) auf, sowie weitere durch den Haupthydraulikzweig 10 versorgte Komponenten, wie Steuerventile (nicht gezeigt), Lenkhydraulik (nicht gezeigt), Bremshydraulik (nicht gezeigt) und eine hydraulisch betätigbare Anhängevorrichtung 36.

Auch wenn die Erfindung lediglich anhand von zwei Ausführungsbeispielen beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Hydraulische Anordnung für ein landwirtschaftliches Fahrzeug (30) mit einem Haupthydraulikzweig (10), der von einer Haupthydraulikpumpe (18) mit Hydraulikflüssigkeit gespeist wird, einer Ladepumpe (22), durch welche die Haupthydraulikpumpe (18) mit Hydraulikflüssigkeit aufladbar ist, und einem Schmierhydraulikzweig (12, 14), **dadurch gekennzeichnet, dass** die Ladepumpe (22) als variable Ladepumpe ausgebildet ist und wenigstens eine Teilmenge der von der Ladepumpe (22) geförderten Hydraulikflüssigkeit zur Versorgung des Schmierhydraulikzweigs (12, 14) abzweigbar ist.

2. Hydraulische Anordnung nach Anspruch 1, **dadurch gekennzeichnet, dass** ein Schalthydraulikzweig (16) zur Schaltung von Kupplungen eines Getriebes vorgesehen ist, wobei wenigstens eine Teilmenge der von der Haupthydraulikpumpe (18) geförderten Hydraulikflüssigkeit zur Versorgung des Schalthydraulikzweigs (16) abzweigbar ist.

3. Hydraulische Anordnung nach Anspruch 1, **dadurch gekennzeichnet, dass** ein Schalthydraulikzweig (16) zur Schaltung von Kupplungen in einem Getriebe und eine Konstantpumpe (26) vorgesehen sind, wobei der Schalthydraulikzweig (16) von der Konstantpumpe (26) mit Hydraulikflüssigkeit versorgbar ist.

4. Hydraulische Anordnung nach Anspruch 3, **dadurch gekennzeichnet, dass** wenigstens eine Teilmenge der von der Konstantpumpe (26) geförderten Hydraulikflüssigkeit zur Aufladung der Haupthydraulikpumpe (18) abzweigbar ist.

5. Hydraulische Anordnung nach Anspruch 3 oder 4, **dadurch gekennzeichnet, dass** wenigstens eine Teilmenge der von der Konstantpumpe (26) geförderten Hydraulikflüssigkeit zur Versorgung des Schmierhydraulikzweigs (12, 14) abzweigbar ist.

6. Hydraulische Anordnung nach einem der vorhergehenden Ansprüche, **dadurch gekennzeichnet, dass** der Schmierhydraulikzweig (12, 14) zur Schmierung eines Getriebes vorgesehen ist.

7. Hydraulische Anordnung nach einem der vorhergehenden Ansprüche, **dadurch gekennzeichnet, dass** der Schmierhydraulikzweig (12, 14) zur Schmierung von Fahrzeugachsen (32) oder Fahrzeugachskomponenten vorgesehen ist.

8. Hydraulische Anordnung nach einem der vorhergehenden Ansprüche, **dadurch gekennzeichnet, dass** der Haupthydraulikzweig (10) zur hydraulischen Versorgung von Steuerventilen vorgesehen ist.

9. Hydraulische Anordnung nach einem der vorhergehenden Ansprüche, **dadurch gekennzeichnet, dass** der Haupthydraulikzweig (10) zur hydraulischen Versorgung einer hydraulischen Anhängevorrichtung (36), vorzugsweise einer Dreipunktanhängevorrichtung, vorgesehen ist.

10. Hydraulische Anordnung nach einem der vorhergehenden Ansprüche, **dadurch gekennzeichnet, dass** der Haupthydraulikzweig (10) zur hydraulischen Versorgung einer Achsfederung für eine Achse (32) des Fahrzeugs (30) vorgesehen ist.

11. Hydraulische Anordnung nach einem der vorhergehenden Ansprüche, **dadurch gekennzeichnet, dass** der Haupthydraulikzweig (10) zur hydraulischen Versorgung einer Kabinenfederung für eine Kabine (34) des Fahrzeugs (30) vorgesehen ist.

12. Hydraulische Anordnung nach einem der vorhergehenden Ansprüche, **dadurch gekennzeichnet, dass** der Haupthydraulikzweig (10) zur hydraulischen Versorgung einer Bremsanlage für Bremsen am Fahrzeug (30) vorgesehen ist.

13. Hydraulische Anordnung nach einem der vorhergehenden Ansprüche, **dadurch gekennzeichnet, dass** der Haupthydraulikzweig (10) zur hydraulischen Versorgung einer Lenkanlage für eine Lenkung des Fahrzeugs (30) vorgesehen ist.
